# EUROPÄISCHE PATENTSCHRIFT

(11) **EP 0 855 545 B1**
(45) Veröffentlichungstag und Bekanntmachung des Hinweises auf die Patenterteilung: **09.04.2003**
(21) Anmeldenummer: 97122593.3
(22) Anmeldetag: 20.12.1997
(51) Int. Cl.: F16K 35/02, F16K 31/60

(54) **Betätigungsgriff für ein Sanitärelement**
Handle for a sanitary valve
Poignée pour robinet sanitaire

(30) Priorität: 23.01.1997 DE 19702360
(43) Veröffentlichungstag der Anmeldung: 29.07.1998
(73) Patentinhaber: Hansgrohe AG, 77761 Schiltach (DE)
(72) Erfinder: Lorch, Werner, 78713 Schramberg (DE)
(74) Vertreter: Patentanwälte Ruff, Wilhelm, Beier, Dauster & Partner

(56) Entgegenhaltungen:
- EP-A- 0 232 454
- EP-A- 0 282 775
- EP-A- 0 608 523
- EP-A- 0 621 427
- EP-A- 0 643 246
- CH-A- 423 387
- DE-A- 4 417 485
- DE-C- 3 402 103
- FR-A- 2 346 624
- FR-A- 2 421 321
- US-A- 4 064 904

## Beschreibung

Ein Sanitärelement mit einem Betätigungsgriff ist beispielsweise aus DE-PS 3402103 bekannt. Hier ist der Griff schalenartig aufgebaut und weist an seiner Innenseite eine Aufnahme für den Steuerhebel des Ventils auf. Ein Anschlagelement ragt aus der radialen Außenseite heraus und kann von dem Benutzer zur Überwindung eines Anschlags nach innen gedrückt werden.

Ebenfalls bekannt ist eine Sanitärarmatur mit einem Handgriff, der an dem Betätigungselement angebracht werden kann. Der Handgriff enthält ein inneres Element, an dem das Anschlagelement und die Verbindungseinrichtung zur Anbringung an einer Drehspindel angebracht sind. Auf dieses innere Teil kann eine Griffkappe aufgesetzt werden, die das innere Teil vollständig umgibt. Das Anschlagelement ragt durch eine Öffnung nach außen. Bei dieser Art Handgriff kann zwar die äußere Schale ausgewechselt oder ausgetauscht werden, das eigentliche den Griff ausmachende Teil ist aber das innere Teil (DE-OS 44 17 485).

Weiterhin bekannt ist ein Handgriff für ein Mengenregulierventil (EP 621427). Hier kann das äußere Ende des Handgriffs von einer Kappe abgedeckt werden, die erforderlich ist, um eine Öffnung, durch die eine Schraube zugänglich ist, abzudecken.

Weiterhin ist ein oberbegriffsmäßiger Betätigungsgriff für ein Ventil bekannt (FR-A-2 346 624), bei dem an dem mit einer Spindel des Ventils verbindbaren Betätigungsgriff ein Funktionselement angebracht ist, dass einen Anschlag aufweist.

Der Erfindung liegt die Aufgabe zugrunde, einen Griff zu schaffen, bei dem verschiedene Griffschalen mit verschiedenen Anschlagelementen kombiniert werden können.

Zur Lösung dieser Aufgabe schlägt die Erfindung einen Griff mit den im Anspruch 1 genannten Merkmalen und einen Griff mit den Merkmalen des Anspruchs 2 vor. Weiterbildungen der Erfindung sind Gegenstand von Unteransprüchen.
Im Gegensatz zum Stand der Technik wird also der Griff im wesentlichen von der Griffschale gebildet. Diese Griffschale weist die Verbindungseinrichtung für das Betätigungselement des Sanitärelements auf, beispielsweise für eine Drehspindel eines Thermostatventils. Die Betätigung erfolgt also direkt von der Griffschale aus. Das Funktionselement, das das Anschlagelement enthält, kann an der Griffschale befestigt werden, so daß es relativ einfach ist, mit der Griffschale unterschiedliche Funktionselemente zu verbinden. Damit läßt sich der Griff ohne Änderung seines äußeren Aussehens sowohl für Mengenregulierventile als auch für Thermostaten verwenden.

In Weiterbildung der Erfindung kann vorgesehen sein, daß das Anschlagelement bewegbar ausgebildet ist und außer Eingriff mit dem Anschlag des Sanitärelements gebracht werden kann.

Insbesondere kann vorgesehen sein, daß das Anschlagelement des Funktionsteils bei montiertem Griff von einem Benutzer bewegt werden kann, beispielsweise dadurch, daß der Benutzer von außen auf das Anschlagelement oder ein mit diesem verbundenes Teil drückt. Dadurch wird es beispielsweise möglich, bei Thermostatenventilen eine obere oder untere Temperaturbegrenzung zu überwinden. Erfindungsgemäß kann vorgesehen sein, daß das Funktionselement hülsenartig oder ringartig ausgebildet ist. Damit kann dafür gesorgt werden, daß das Zusammenwirken der Griffschale mit dem Betätigungselement sich sehr einfach gestaltet, da das Funktionselement zusammen mit der Griffschale einfach auf das Betätigungselement aufgeschoben werden kann und dieses durch das Funktionselement hindurch ragt.

Erfindungsgemäß kann vorgesehen sein, daß das Funktionselement radial und axial im wesentlichen vollständig von der Griffschale überdeckt wird. Dann handelt es sich bei dem Funktionselement um ein von außen nicht sichtbares Element, das sich dann nur mit der Funktion des Anschlags befaßt. Das Anschlagelement kann dabei durch eine Öffnung der Griffschale nach außen ragen oder von außen her zugänglich sein. Für den Betrachter ist nicht erkennbar, daß ein solches Funktionselement vorhanden ist.

Es ist aber ebenfalls möglich, daß das Funktionselement mindestens teilweise sichtbar ist. In diesem Fall kann es als Gestaltungselement mit herangezogen werden. So kann beispielsweise das Funktionselement eine radiale Außenfläche aufweisen, die eine Fortsetzung der Außenfläche der Griffschale darstellt.

Die Außenfläche der Griffschale und Außenfläche des Funktionselements können in diesem Fall farblich oder in ihrer Oberflächenbeschaffenheit voneinander abgesetzt sein.

Ebenfalls möglich ist es, daß das Funktionselement axial an die Griffschale anschließt, ohne daß ihre Außenflächen Fortsetzungen voneinander sind.

Das Funktionselement kann mit Vorteil axial und radial an der Griffschale festgelegt sein, insbesondere angeschraubt sein, und zwar insbesondere mit Hilfe von axial verlaufenden Schrauben. Auch eine Schnappverbindung ist möglich.

Erfindungsgemäß kann die Griffschale, die die Verdrehung und ggf. auch Verschwenkung des Betätigungselements bewirkt, im Einzelfall auch ohne Funktionselement verwendet werden, falls nämlich ein Anschlag im Einzelfall nicht erforderlich ist.

Weitere Merkmale, Einzelheiten und Vorzüge der Erfindung ergeben sich aus den Patentansprüchen, deren Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Fig. 1: einen Längsschnitt durch einen Betätigungsgriff nach der Erfindung;
- Fig. 2: einen Längsschnitt durch einen Betätigungsgriff bei einer zweiten Ausführungsform;
- Fig. 3: einen Längsschnitt durch eine dritte Ausführungsform.

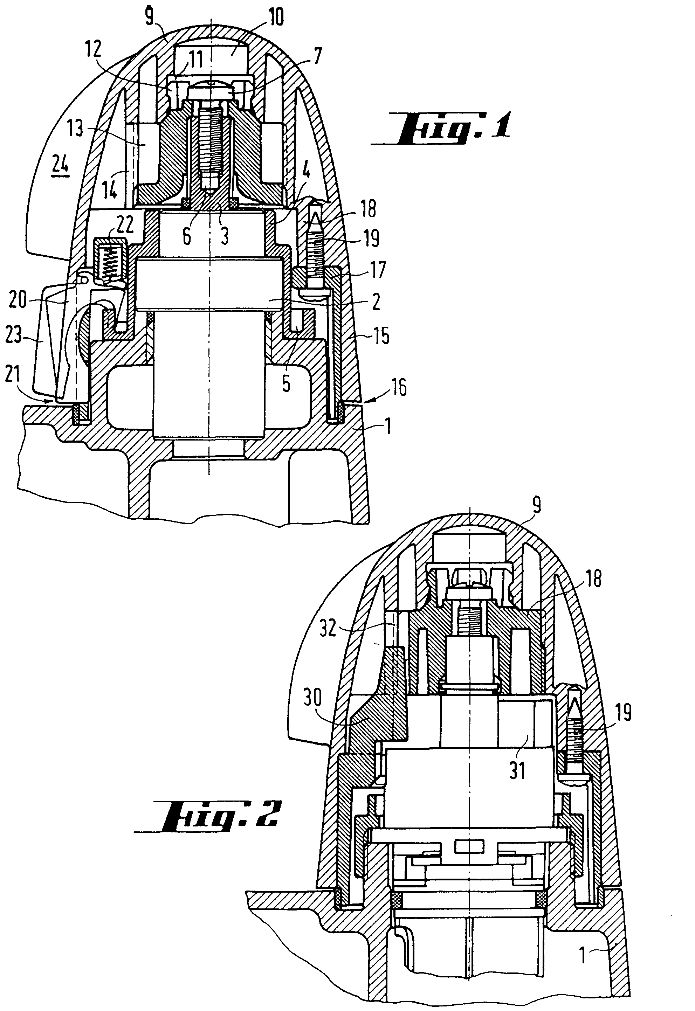

In Fig. 1 ist ein Teilschnitt durch den vorderen Teil eines Sanitärelements 1 dargestellt, im dargestellten Beispiel eines Mengenregulierventils. In diesem Sanitärelement ist ein handelsüblicher Einsatz in Form eines Ventiloberteils 2 eingesetzt. Zur Betätigung des Ventiloberteils 2 dient eine Drehspindel 3, die aus dem Ventiloberteil herausragt.

Auf die Außenseite des Ventiloberteils 2 ist eine Hülse 4 aufgeschraubt, die eine umlaufende Nut 5 bildet. In der Nut 5 ist ein Anschlag gebildet, mit dessen Hilfe eine Öffnungsstellung des Ventils begrenzt werden soll.

Die Drehspindel 3 enthält im Bereich ihres freien Endes eine Gewindebohrung 6, in die eine Schraube 7 eingeschraubt ist. Die Schraube 7 dient zum Festlegen eines Adapterelements 8, das drehfest mit der Drehspindel 3 verbunden ist. Die drehfeste Verbindung zwischen dem Adapterelement und der Drehspindel 3 geschieht durch eine Längsverzahnung der Außenseite der Drehspindel und der Innenseite der Öffnung des Adapterelements 8.

Auf die Außenseite des Adapterelements 8 ist eine Griffschale 9 aufgeschoben und rastend festgelegt. Die Griffschale 9 weist an ihrer Innenseite eine Aufnahme 10 für das Adapterelement 8 auf. Die Aufnahme 10 enthält eine umlaufende hinterschnittene Nut 11, in der Rastnasen 12 des Adapterelements 8 einschnappen. Die drehfeste Verbindung zwischen dem Adapterelement 8 und der Griffschale 9 wird durch ein Eingreifen von radialen Vorsprüngen 13 in eine Verzahnung einer Innenhülse 14 erreicht. Die Innenhülse 14 ist einstückiger Teil der Griffschale 9.

Die Außenfläche 15 der Griffschale 9 reicht bis unmittelbar an das Gehäuse des Sanitärelements 1 heran. Es ist zwischen der Außenfläche 15 der Griffschale 9 und dem Gehäuse des Sanitärelements 2 ein ganz schmaler Spalt 16 vorhanden, der sich längs um die Griffschale 9 herum erstreckt.

Auf diese Weise ist für den Betrachter nur die Griffschale 9 zu sehen. In das Innere der Griffschale 9 ist ein Funktionselement 17 von der offenen Seite der Griffschale 9 her eingeschoben und an nach innen ragenden Vorsprüngen 18 mit Hilfe von zwei Schrauben 19 festgeschraubt. Der Schnitt der Fig. 1 zeigt nur eine dieser Schrauben 19. Die Schrauben 19 verlaufen im wesentlichen axial und sind in dem Raum zwischen dem Ventiloberteil 2 und der Griffschale 9 angeordnet.

An dem Funktionselement 17, das von außen her nicht sichtbar ist, ist ein Anschlagelement 20 verschwenkbar angeordnet, das durch eine schlitzartige Öffnung 21 der Griffschale 9 radial nach außen ragt. Eine axial wirkende Druckfeder 22 in dem Funktionselement 17 beaufschlagt das Anschlagelement 20 derart, daß es mit einem Anschlag in der Nut 5 zusammenwirkt, um dadurch eine Drehbewegung zu begrenzen. Der durch den Schlitz 21 nach außen ragende Teil 23 des Anschlagelements 20 ist als Drucktaste ausgebildet. Sie liegt in axialer Verlängerung einer Flosse 24, die an der Griffschale 9 außen angebracht ist.

Soll die Griffschale 9 bei einem Ventiloberteil verwendet werden, bei dem ein Anschlag nicht vorhanden oder nicht gewünscht wird, so kann das Funktionselement 17 aus der Griffschale heraus geschraubt werden. Die Griffschale 19 ist auch in diesem Fall als Betätigungsgriff für das Ventiloberteil vollständig funktionsfähig.

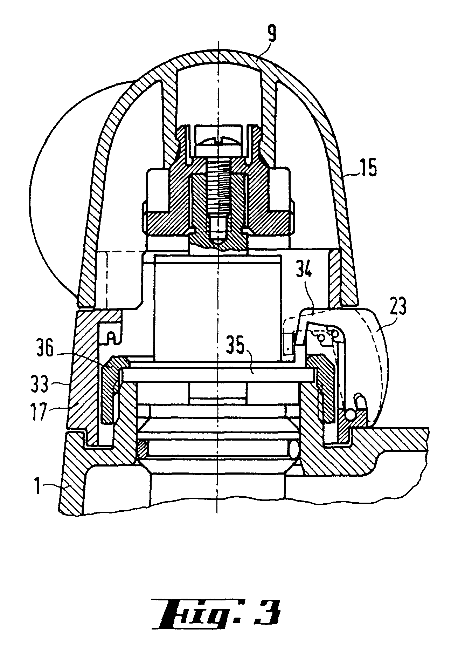

Fig. 2 zeigt eine Ausführungsform, bei der die Griffschale 9 mit einem Funktionselement 17 zusammenwirkt, das ein nicht bewegbares Anschlagelement 30 aufweist. Dieses Anschlagelement 30 greift an einem anderen Anschlag 31 eines Sanitärelements an, das im dargestellten Beispiel ein Thermostatventil ist. Wiederum ist das Funktionselement 17 mit Hilfe von Schrauben 19 in dem Inneren der Griffschale 9 festgeschraubt. Die Form der Griffschale unterscheidet sich von der Form der Fig. 1 im wesentlichen nur dadurch, daß die Öffnung 21 für die Taste 23 des Anschlagelements 20 nicht vorhanden ist. Diese Öffnung könnte aber auch von einem Teil des Funktionselements 17 ausgefüllt werden.

Das Adapterelement ist ähnlich aufgebaut wie das Adapterelement 18 der Ausführungsform nach Fig. 1. Das Anschlagelement 30 des Funktionselements ragt bis in das Adapterelement 18 hinein. Dort ist eine Öffnung 32 vorhanden, die dazu dient, die korrekte Positionierung des Funktionselements 17 zu der Griffschale 9 zu gewährleisten.

Während bei der Ausführungsform nach Fig. 1 und Fig. 2 das Funktionselement 17 nicht sichtbar ist, ist es bei der Ausführungsform nach Fig. 3 als ein Ringelement mit einer konischen Außenfläche 33 ausgebildet, die unmittelbar in die Außenfläche 15 der Griffschale 9 übergeht. Das Funktionselement 17 bildet eine Art Sockel für die Griffschale 9. Die Außenfläche 33 des Funktionselements 17 kann dabei die gleiche Farbe oder die gleiche Oberflächenbeschaffenheit wie die Griffschale 9 aufweisen oder auch gegenüber dieser abgesetzt sein. Das Funktionselement dient hier als Gestaltungsmittel. Das Anschlagelement 34 bildet wieder eine Taste 23, die von der radialen Außenseite her zugänglich ist, damit der Benutzer durch Drücken auf die Taste einen Anschlag überwinden kann. Der Anschlag ist in diesem Fall an einem Anschlagring 35 ausgebildet, der an dem Sanitärelement 1 mit Hilfe einer Überwurfmutter 36 angeschraubt und festgelegt werden kann.

## Patentansprüche

1. Betätigungsgriff für ein ein Betätigungselement aufweisendes Sanitärelement (1), mit
1.1 einer äußeren zum Anfassen bestimmten Griffschale (9), die
1.1.1 an ihrer Innenseite eine Verbindungseinrichtung zum Verbinden mit dem Betätigungselement aufweist,
1.2 einem Funktionselement (17), das
1.2.1 an der Griffschale (9) befestigt ist und
1.2.2 ein Anschlagelement (20, 30) aufweist, das
1.2.3 mit mindestens einem Anschlag (31) an dem Sanitärelement (1) zusammenwirken kann, **dadurch gekennzeichnet, dass**
1.3 das Funktionselement (17) hülsenartig ausgebildet ist und
1.4 eine radiale Außenfläche (33) aufweist, die eine Fortsetzung der Außenfläche (15) der Griffschale (9) darstellt.

2. Betätigungsgriff für ein ein Betätigungselement aufweisendes Sanitärelement (1), mit
2.1 einer äußeren zum Anfassen bestimmten Griffschale (9), die
2.1.1 an ihrer Innenseite eine Verbindungseinrichtung zum Verbinden mit dem Betätigungselement aufweist,
2.2 einem Funktionselement (17), das
2.2.1 an der Griffschale (9) befestigt ist und
2.2.2 ein Anschlagelement (20, 30) aufweist, das
2.2.3 mit mindestens einem Anschlag (31) an dem Sanitärelement (1) zusammenwirken kann, **dadurch gekennzeichnet, dass**,
2.3 das Funktionselement (17) radial und axial im wesentlichen vollständig von der Griffschale (9) überdeckt wird und mit dieser Drehfest verbunden ist.

3. Griff nach Anspruch 1 oder 2, bei dem das Anschlagelement (20) bewegbar ausgebildet ist und außer Eingriff mit dem Anschlag des Sanitärelements (1) gebracht werden kann.

4. Griff nach Anspruch 3, bei dem das Anschlagelement (20) bei an dem Sanitärelement montiertem Griff von einem Benutzer bewegt werden kann.

5. Griff nach einem der Ansprüche 1, 3 oder 4, bei dem das Funktionselement (17) axial an die Griffschale (9) anschließt.

6. Griff nach einem der Ansprüche 1 oder 3 bis 5, bei dem das Funktionselement (17) mit axial gerichteten Schrauben (19) an der Griffschale (9) anschraubbar ist.

## Claims

1. Operating handle for a sanitary element (1) having an operating element, having
1.1 an outer handle shell (9) used for gripping purposes, which
1.1.1 has on its inside a connecting mechanism for connecting to the operating element,
1.2 a functional element (17), which
1.2.1 is fixed to the handle shell (9) and
1.2.2 has a stop element (20, 30), which
1.2.3 can cooperate with at least one stop (31) on the sanitary element (1), **characterized in that**
1.3 the functional element (17) has a sleeve-like construction and
1.4 has a radial outer surface (33), which constitutes an extension of the outer surface (15) of the handle shell (9).

2. Operating handle for a sanitary element (1) having an operating element, with
2.1 an outer handle shell (9) intended for gripping purposes, which
2.1.1 has on its inside a connecting mechanism for connection to the operating element,
2.2 a functional element (17), which
2.2.1 is fixed to the handle shell (9) and
2.2.2 has a stop element (20, 30), which
2.2.3 can cooperate with at least one stop (31) on the sanitary element (1), **characterized in that**
2.3 the functional element (17) is radially and axially substantially completely covered by the handle shell (9) and is connected to rotate therewith.

3. Handle according to claim 1 or 2, wherein the stop element (20) is constructed in movable manner and can be disengaged from the stop of the sanitary element (1).

4. Handle according to claim 3, wherein, with the handle mounted on the sanitary element, the stop element (20) can be moved by a user.

5. Handle according to one of the claims 1, 3 or 4, wherein the functional element (17) is connected axially to the handle shell (9).

6. Handle according to one of the claims 1 or 3 to 5, wherein the functional element (17) can be screwed with axially directed screws (19) to the handle shell (9).

## Revendications

1. Manette d'actionnement pour un élément de sanitaire (1) présentant un élément d'actionnement, comprenant
1.1 une coque de manette (9) externe destinée à la préhension qui
1.1.1 présente sur sa face interne un dispositif de liaison pour relier un élément d'actionnement,
1.2 un élément de fonction 17, qui
1.2.1 est fixé sur la coque de manette (9) et
1.2.2 qui présente un élément de butée (20, 30), qui
1.2.3 peut coopérer avec au moins une butée (31) sur l'élément de sanitaire (1), **caractérisée en ce que**
1.3 l'élément de fonction (17) est réalisé comme un manchon et
1.4 présente une surface externe radiale (33) qui représente une continuité de la surface externe (15) de la coque de manette (9).

2. Manette d'actionnement pour un élément de sanitaire (1) présentant un élément d'actionnement, comprenant
2.1 une coque de manette (9) externe destinée à la préhension qui
2.1.1 présente sur sa face interne un dispositif de liaison pour relier un élément d'actionnement,
2.2 un élément de fonction 17, qui
2.2.1 est fixé sur la coque de manette (9) et
2.2.2 qui présente un élément de butée (20, 30), qui
2.2.3 peut coopérer avec au moins une butée (31) sur l'élément de sanitaire (1), **caractérisée en ce que**
2.3 l'élément de fonction (17) est recouvert radialement et axialement sensiblement complètement par la coque de manette (9) et est relié fixement à cette dernière.

3. Manette selon la revendication 1 ou 2, où l'élément de butée (20) est réalisé mobile et peut être désengagé de la butée de l'élément de sanitaire (1).

4. Manette selon la revendication 3, où l'élément de butée (20) peut être déplacé par l'utilisateur par la manette montée sur l'élément de sanitaire.

5. Manette selon l'une des revendications 1, 3 ou 4, où l'élément de fonction (17) se poursuit axialement par la coque de manette (9).

6. Manette selon l'une des revendications 1 ou 3 à 5, où l'élément de fonction (17) peut être vissé sur la coque de manette (9) par des vis dirigées axialement (19).
